# EUROPÄISCHE PATENTSCHRIFT

(11) **EP 3 424 290 B1**
(45) Veröffentlichungstag und Bekanntmachung des Hinweises auf die Patenterteilung: **29.04.2020**
(21) Anmeldenummer: 18401055.1
(22) Anmeldetag: 29.06.2018
(51) Int. Cl.: A01C 17/00

(54) **VERTEILGERÄT FÜR STREUGUT**
DISTRIBUTOR FOR SPREADING MATERIAL
APPAREIL DE DISTRIBUTION POUR MATÉRIAU D'ÉPANDAGE

(30) Priorität: 05.07.2017 DE 102017114975
(43) Veröffentlichungstag der Anmeldung: 09.01.2019
(73) Patentinhaber: Amazonen-Werke H. Dreyer GmbH & Co. KG, 49205 Hasbergen (DE)
(72) Erfinder: Dreyer, Justus, 49078 Osnabrück (DE); Johannaber, Stefan Jan, 49536 Lienen (DE); Kleine-Hartlage, Hubertus, 49186 Bad Iburg (DE); Krabbe, Ulrich, 49205 Hasbergen (DE); Hilbert, Florenz, 48282 Emsdetten (DE)

(56) Entgegenhaltungen:
- DE-A1-102007 021 442
- DE-A1-102010 037 030
- DE-A1-102010 037 935
- DE-A1-102012 100 930

## Beschreibung

Die Erfindung betrifft ein Verteilgerät für Streugut nach dem Oberbegriff des Patentanspruchs 1.

Verteilgeräte für Streugut, wie etwa Düngerstreuer, nutzen rotierend antreibbare Schleuderscheiben, um das Streugut zum Auswerfen auf eine Fläche zu beschleunigen.

Im Bereich von Feldgrenzen, Feldrändern und keilförmig zulaufenden Feldabschnitten ist regelmäßig die Anpassung des Wurfbildes notwendig, um das Streugut möglichst präzise ausbringen zu können. Hierbei ist besonders der Auswurf von Streugut über die Feldgrenzen hinweg zu vermeiden.

Im Stand der Technik sind bereits Verteilgeräte für Streugut bekannt, welche verstellbare Führungselemente aufweisen, welche dazu eingerichtet sind, das auf die Streuscheibe aufgegebene Streugut zu führen. Über die Verstellung der Führungselemente kann dabei die Anpassung des Wurfbildes erreicht werden.

Aus der Druckschrift DE 10 2010 037 935 A1 ist beispielsweise ein Zentrifugaldüngerstreuer bekannt, dessen Wurfschaufeln mittels eines Schwenkbolzens schwenkbar auf den Schleuderscheiben befestigt sind. Die Druckschrift EP 1 618 775 A1 schlägt einen Zentrifugaldüngerstreuer vor, bei welchem die Wurfschaufeln hinsichtlich ihrer wirksamen Länge verstellbar sind.

Darüber hinaus ist aus der Druckschrift DE 10 2007 021 442 B4 ein Zentrifugaldüngerstreuer bekannt, bei welchem Teile der Wurfschaufeln in vertikaler Richtung senkrecht zur Scheibenebene bewegbar sind. Ferner schlägt die Druckschrift DE 10 2010 060 155 A1 einen Zentrifugaldüngerstreuer vor, bei welchem die Winkelstellung der Wurfschaufeln in der Schleuderscheibenebene verstellt werden kann.

Diese und andere bekannte Lösungen bedingen jedoch eine aufwändige und fehleranfällige Verstelleinrichtung, damit die Führungselemente zum Anpassen des Wurfbildes eingestellt werden können. Ferner sind die einstellbaren Wurfbilder des Streuguts bei den bekannten Lösungen teilweise äußerst beschränkt, sodass eine präzise Ausbringung von Streugut bei komplexen Feldgeometrien nicht ohne Weiteres möglich ist.

Die der Erfindung zugrunde liegende Aufgabe besteht somit darin, ein Verteilgerät für Streugut bereitzustellen, bei welchem das Wurfbild präzise in weiten Grenzen eingestellt werden kann, wobei die Konstruktion vergleichsweise einfach und robust gegenüber Beschädigungen und Fehlfunktionen ist.

Die Aufgabe wird gelöst durch ein Verteilgerät der eingangs genannten Art, wobei die Verstelleinrichtung ein zumindest abschnittsweise innerhalb einer Ausnehmung der Antriebswelle in axialer Richtung bewegbares Betätigungsglied umfasst, über welches das eine oder die mehreren Führungselemente verstellbar sind.

Die Erfindung macht sich die Erkenntnis zunutze, dass durch die Verwendung einer Antriebswelle, welche eine sich in axialer Richtung durch die Antriebswelle erstreckende Ausnehmung aufweist, und die Anordnung eines bewegbaren Betätigungsgliedes innerhalb dieser Ausnehmung eine äußerst robuste und langlebige Konstruktion geschaffen wird, da das Betätigungsglied zum Verstellen des einen oder der mehreren Führungselemente von außen nicht ohne Weiteres zugänglich ist und durch die Ausnehmung in der Antriebswelle vor äußeren Einflüssen und Beanspruchungen, insbesondere auch Stoßbelastungen, geschützt ist. Somit kann eine Wurfbildanpassung erreicht werden, ohne dass hierdurch die Fehler- und/oder Beschädigungsanfälligkeit des Verteilgeräts erhöht wird.

Vorzugsweise sind auf der Schleuderscheibe zusätzlich zu dem einen oder den mehreren verstellbaren Führungselementen feststehende Wurfschaufeln angeordnet. Das eine oder die mehreren Führungselemente können das Streugut entweder auf die Wurfschaufeln der Schleuderscheibe lenken oder das Streugut direkt auswerfen, sodass dieses nicht in Kontakt mit den auf der Schleuderscheibe angeordneten feststehenden Wurfschaufeln kommt. Durch die Verstellung des einen oder der mehreren Führungselemente können unterschiedliche Wurfbilder realisiert werden. Durch die unterschiedlichen Wurfbilder kann das Verteilgerät zum Grenz-, Rand- oder Keilstreuen eingesetzt werden. Die Abwurfcharakteristik ist außerdem abhängig von dem Aufgabepunkt des Streuguts auf die Schleuderscheibe und der Drehzahl der Schleuderscheibe. Das Verteilgerät kann ein Zentrifugaldüngerstreuer sein.

In einer besonders bevorzugten Ausführungsform des erfindungsgemäßen Verteilgeräts erstreckt sich die Ausnehmung in der Antriebswelle über die gesamte Länge der Antriebswelle. Somit ist die Antriebswelle als Hohlwelle ausgebildet. Die Ausnehmung weist vorzugsweise einen kreisförmigen Querschnitt auf, wobei der Querschnitt der Ausnehmung über die gesamte Länge der Antriebswelle vorzugsweise gleich ist. Dadurch, dass die Antriebswelle als Hohlwelle ausgebildet ist, wird einerseits Gewicht eingespart und andererseits kann ein druckbeaufschlagtes Fluid, beispielsweise eine Flüssigkeit, ein Gas, oder ein Gasgemisch durch die Antriebswelle geführt werden, sodass das Fluid durch Druckbeaufschlagung zur Verstellung des einen oder der mehreren Führungselemente eingesetzt werden kann.

In einer vorteilhaften Weiterbildung des erfindungsgemäßen Verteilgeräts ist das Betätigungsglied rotatorisch mit der Antriebswelle gekoppelt. Dadurch, dass das Betätigungsglied rotatorisch mit der Antriebswelle gekoppelt ist, kommt es zu einer Drehbewegung des Betätigungsglieds, wenn die Antriebswelle rotiert. Die rotatorische Kopplung kann derart ausgebildet sein, dass das Betätigungsglied und die Antriebswelle stets mit der gleichen Drehzahl rotieren. In diesem Fall kann das Betätigungsglied beispielsweise über ein Koppelelement, wie beispielsweise einen Stift oder einen Bolzen, mit der Antriebswelle verbunden sein. Alternativ kann die rotatorische Kopplung derart ausgebildet sein, dass Drehzahlunterschiede zwischen dem Betätigungsglied und der Antriebswelle möglich sind. In diesem Fall können beispielsweise Flüssigkeiten oder verdrehbare Kopplungselemente zur rotatorischen Kopplung des Betätigungsglieds und der Antriebswelle eingesetzt werden.

Erfindungsgemäß ist die Ausnehmung in der Antriebswelle mit einem Hydraulikanschluss gekoppelt, wobei das Betätigungsglied als Kolben ausgebildet ist, welcher durch Beaufschlagung mit Hydraulikdruck innerhalb der Ausnehmung der Antriebswelle in axialer Richtung bewegbar ist. Der Hydraulikanschluss ist vorzugsweise an einem nichtdrehbaren Anschlusselement des Verteilgeräts angeordnet. Vorzugsweise ist der Hydraulikanschluss als Anschlussstutzen ausgebildet, welcher zur Kopplung mit einer Hydraulikleitung ausgebildet ist.

In einer anderen Ausführungsform des erfindungsgemäßen Verteilgeräts ist das Betätigungsglied als Bestandteil einer hydraulischen Betätigungseinrichtung ausgebildet, wobei das Betätigungsglied hydraulisch innerhalb der Ausnehmung der Antriebswelle in axialer Richtung bewegbar ist. Wenn das Betätigungsglied als Bestandteil einer hydraulischen Betätigungseinrichtung ausgebildet ist, kann das Betätigungsglied durch eine Hydraulikflüssigkeit innerhalb der Ausnehmung der Antriebswelle in axialer Richtung bewegt werden. Wenn das Betätigungsglied als Bestandteil einer nicht erfindungsgemäßen pneumatischen Betätigungseinrichtung ausgebildet ist, kann das Betätigungsglied durch ein Gas oder Gasgemisch innerhalb der Ausnehmung der Antriebswelle in axialer Richtung bewegt werden. Wenn das Betätigungsglied als Bestandteil einer nicht erfindungsgemäßen elektrischen Betätigungseinrichtung ausgebildet ist, kann das Betätigungsglied über einen Elektromotor, beispielsweise einen Linearmotor, innerhalb der Ausnehmung der Antriebswelle in axialer Richtung bewegt werden.

Vorteilhaft ist ferner ein erfindungsgemäßes Verteilgerät, bei welchem das Betätigungsglied zumindest in einem Zustand der Verstelleinrichtung aus der der Schleuderscheibe zugewandten Seite der Antriebswelle herausragt. Beispielsweise ist die Ausnehmung der Antriebswelle auf der der Schleuderscheibe abgewandten Seite in diesem Fall mit einer Hydraulikflüssigkeit, einem Gas oder einem Gasgemisch gefüllt, wobei über eine Druckregelung der Hydraulikflüssigkeit, des Gases oder des Gasgemisches das Betätigungsglied aus der Antriebswelle heraus und/oder in die Antriebswelle hinein bewegt werden kann.

In einer besonders bevorzugten Ausführungsform des erfindungsgemäßen Verteilgeräts ist das Betätigungsglied von der Antriebswelle rotatorisch entkoppelt. Beispielsweise kann das Betätigungsglied nicht-drehbar ausgebildet sein oder eine von der Antriebswelle unabhängige Rotationscharakteristik aufweisen. Bevorzugt ist außerdem ein erfindungsgemäßes Verteilgerät, bei welchem das Betätigungsglied innerhalb eines Betätigungszylinders auf der der Schleuderscheibe abgewandten Seite der Antriebswelle angeordnet ist. Das Betätigungsglied ist vorzugsweise als Kolben des Betätigungszylinders ausgebildet. Der Betätigungszylinder ist ein hydraulisch ansteuerbarer Zylinder. Der Betätigungszylinder kann als doppelt wirkender Zylinder ausgebildet sein, sodass das eine oder die mehreren Führungselemente mittels des Betätigungszylinders nach dem Hineinbewegen in den Aufgabebereich der Schleuderscheibe auch wieder aus dem Aufgabebereich der Schleuderscheibe heraus bewegt werden können. Alternativ oder zusätzlich können zum Bewegen des einen oder der mehreren Führungselemente aus dem Aufgabebereich der Schleuderscheibe heraus eine oder mehrere Rückstellfedern eingesetzt werden.

In einer anderen bevorzugten Ausführungsform des erfindungsgemäßen Verteilgeräts ist das Betätigungsglied derart von der Antriebswelle rotatorisch entkoppelt, dass das Betätigungsglied während der Rotation der Antriebswelle keine Drehbewegung ausführt. Durch eine derartige Entkopplung des Betätigungsglieds von der Antriebswelle kann zum Abdichten des Betätigungsglieds auf die Verwendung einer dynamischen Dichtung verzichtet werden, welche Rotationsbewegungen aufnehmen muss. Ferner wird dadurch, dass eine Drehbewegung des Betätigungsglieds nicht stattfindet, die Momentenbelastung des Betätigungsglieds erheblich reduziert, wodurch die Beschädigungsanfälligkeit verringert wird.

Eine Weiterbildung des erfindungsgemäßen Verteilgeräts weist ein zumindest abschnittsweise innerhalb der Ausnehmung der Antriebswelle angeordnetes Übertragungsglied auf, welches dazu eingerichtet ist, eine Axialbewegung des Betätigungsglieds an das eine oder die mehreren Führungselemente oder an einen mit dem einen oder den mehreren Führungselementen verbundenen Bewegungsumwandler zu übertragen. Zur Übertragung der Axialbewegung des Betätigungsglieds steht das Übertragungsglied vorzugsweise mit dem Betätigungsglied, insbesondere innerhalb der Ausnehmung der Antriebswelle, in Kontakt. Der Bewegungsumwandler kann die Axialbewegung des Betätigungsglieds und des Übertragungsglieds in eine andere Bewegungsform, wie beispielsweise eine Schwenkbewegung oder eine Radialbewegung, umformen. Auf diese Weise kann durch eine Axialbewegung des Betätigungsglieds ein Verschwenken des einen oder der mehreren Führungselemente und/oder ein radiales Verfahren des einen oder der mehreren Führungselemente auf der Schleuderscheibe realisiert werden.

Außerdem ist ein erfindungsgemäßes Verteilgerät bevorzugt, bei welchem zwischen dem Betätigungsglied und dem Übertragungsglied ein Axiallager angeordnet ist. Vorzugsweise ist das Übertragungsglied rotatorisch mit der Antriebswelle gekoppelt. Dadurch, dass das Betätigungsglied rotatorisch von der Antriebswelle entkoppelt ist, weisen das Betätigungsglied und das Übertragungsglied unterschiedliche Drehzahlen während des Betriebs des Verteilgeräts auf. Damit der Drehzahlunterschied zwischen dem Betätigungsglied und dem Übertragungsglied ausgeglichen werden kann, wird ein Axiallager eingesetzt. Alternativ können das Betätigungsglied und das Übertragungsglied auch eine andere geeignete Kopplung aufweisen, welche die Axialkraftübertragung erlaubt und gleichzeitig Drehzahlunterschiede aufnehmen kann. Beispielsweise weisen das Betätigungsglied und das Übertragungsglied in Kontakt stehende gehärtete Enden auf, wobei ein Ende in Kugelform und das andere Ende in Pfannenform ausgebildet ist. Diese Ausführung führt zu einer zusätzlichen Platzeinsparung und eignet sich insbesondere zur Umsetzung von bauraumoptimierten Verteilgeräten.

Außerdem ist ein erfindungsgemäßes Verteilgerät bevorzugt, bei welchem das Betätigungsglied und/oder das Übertragungsglied zumindest in einem Zustand der Verstelleinrichtung aus der der Schleuderscheibe abgewandten Seite der Antriebswelle herausragt. Vorzugsweise ragen das Betätigungsglied und/oder das Übertragungsglied in dem zumindest einen Zustand der Verstelleinrichtung aus der Antriebswelle in ein Getriebegehäuse hinein, wobei innerhalb des Getriebegehäuses ein mit der Antriebswelle verbundenes Kegelradpaar zum Antreiben der Antriebswelle angeordnet ist.

In einer weiteren bevorzugten Ausführungsform des erfindungsgemäßen Verteilgeräts verursacht eine Axialbewegung des Betätigungsglieds eine Bewegung des einen oder der mehreren Führungselemente in einen Aufgabebereich der Schleuderscheibe hinein und/oder aus dem Aufgabebereich der Schleuderscheibe heraus. Im Aufgabebereich der Schleuderscheibe wird das aufgegebene Streugut durch das eine oder die mehreren Führungselemente und/oder durch feststehende Wurfschaufeln beschleunigt und letztendlich ausgeworfen. Vorzugsweise verursacht die Axialbewegung des Betätigungsglieds eine Bewegung des einen oder der mehreren Betätigungselemente in den Aufgabebereich der Schleuderscheibe hinein, wobei die Bewegung des einen oder der mehreren Führungselemente aus dem Aufgabebereich der Schleuderscheibe heraus durch eine oder mehrere Rückstellfedern verursacht wird. Die eine oder die mehreren Rückstellfedern verursachen dabei eine Bewegung des einen oder der mehreren Führungselemente aus dem Aufgabebereich der Schleuderscheibe heraus, wenn die Rückstellkraft der einen oder der mehreren Rückstellfedern die auf das Betätigungsglied wirkende Betätigungskraft übersteigt.

Außerdem ist ein erfindungsgemäßes Verteilgerät bevorzugt, bei welchem die Bewegung des einen oder der mehreren Führungselemente eine Linearbewegung, vorzugsweise parallel zu der Rotationsachse der Schleuderscheibe, und/oder eine Schwenkbewegung des einen oder der mehreren Führungselemente umfasst. Bei einer Linearbewegung des einen oder der mehreren Führungselemente wird die Axialbewegung des Betätigungsglieds vorzugsweise ohne vorherige Bewegungsumwandlung an das eine oder die mehreren Führungselemente übertragen. Bei einer Schwenkbewegung des einen oder der mehreren Führungselemente wird die Axialbewegung des Betätigungsglieds vorzugsweise mit einer vorherigen Bewegungsumwandlung an das eine oder die mehreren Führungselemente übertragen. Demnach kann das eine oder können die mehreren Führungselemente durch eine Hubbewegung in den Aufgabebereich der Schleuderscheibe hineingefahren werden und/oder durch eine Schwenkbewegung in den Aufgabebereich der Schleuderscheibe hineingekippt und/oder gedreht werden.

In einer anderen bevorzugten Ausführungsform des erfindungsgemäßen Verteilgeräts wird das eine oder werden die mehreren Führungselemente bei einer Linearbewegung des Betätigungsglieds in den Aufgabebereich der Schleuderscheibe nach oben geschoben oder nach oben gezogen. Wenn das eine oder die mehreren Führungselemente bei einer Linearbewegung des Betätigungsglieds in den Aufgabebereich der Schleuderscheibe nach oben geschoben werden, ist in dem Übertragungsglied ein Koppelelement, wie etwa ein Stift oder ein Bolzen, angeordnet, welches die Bewegung des Übertragungsglieds unterhalb der Schleuderscheibe an das eine oder die mehreren Führungselemente oder ein das eine oder die mehreren Führungselemente tragendes Trägerteil übergibt. Wenn das eine oder die mehreren Führungselemente bei einer Linearbewegung des Betätigungsglieds in den Aufgabebereich der Schleuderscheibe nach oben gezogen werden, überträgt ein Koppelelement die Bewegung des Übertragungsglieds oberhalb der Schleuderscheibe auf das eine oder die mehreren Führungselemente oder eine das eine oder die mehreren Führungselemente umfassende Baugruppe.

In einer anderen bevorzugten Ausführungsform der erfindungsgemäßen Verteilmaschine ist das eine oder sind die mehreren Führungselemente einfach oder mehrfach gebogen ausgebildet. Vorzugsweise weisen die Führungselemente eine U-Form oder eine L-Form auf. Vorzugsweise erstreckt sich das eine oder erstrecken sich die mehreren Führungselemente durch eine Ausnehmung in der Schleuderscheibe. Durch eine gebogene Ausbildung des einen oder der mehreren Führungselemente kann somit einerseits eine vertikale Führung des aufgegebenen Streuguts erreicht werden und andererseits die Ausnehmung oder die Ausnehmungen, durch welche sich das eine oder die mehreren Führungselemente erstrecken, geschlossen werden, wenn das eine oder die mehreren Führungselemente nicht in den Aufgabebereich der Schleuderscheibe hineinragen.

Das erfindungsgemäße Verteilgerät wird ferner durch eine Steuerungseinrichtung vorteilhaft weitergebildet, welche dazu eingerichtet ist, den auf das Betätigungsglied wirkenden Hydraulikdruck zu steuern. Die Steuerung des Hydraulikdrucks kann dabei beispielsweise selbsttätig in Abhängigkeit einer erfassten Feldgeometrie bzw. einer erfassten Feldform erfolgen. Alternativ oder zusätzlich kann die Steuerung des Hydraulikdrucks auch einer ausgewählten Ausbringroutine folgen.

Ferner ist ein erfindungsgemäßes Verteilgerät bevorzugt, dessen Steuerungseinrichtung dazu eingerichtet ist, die hydraulische Betätigungseinhchtung zu steuern. In diesem Fall ist die Steuerungseinrichtung vorzugsweise dazu eingerichtet, den Hydraulikdruck einer Hydraulikflüssigkeit zu steuern. Außerhalb des Erfindungsgegenstands ist die Steuerungseinrichtung alternativ dazu eingerichtet, den Pneumatikdruck eines Gases oder eine Gasgemisches oder einen Elektromotor der Betätigungseinrichtung zu steuern.

Weitere Einzelheiten der Erfindung sind der Figurenbeschreibung und den Zeichnungen zu entnehmen. Es zeigen
- Fig. 1: ein erfindungsgemäßes Verteilgerät in einem ersten Zustand in einer perspektivischen Darstellung;
- Fig. 2: das in der Fig. 1 dargestellte Verteilgerät in einem zweiten Zustand in einer perspektivischen Darstellung;
- Fig. 3: das in der Fig. 1 dargestellte Verteilgerät in dem ersten Zustand in einer Schnittdarstellung;
- Fig. 4: die Verstelleinrichtung des in der Fig. 1 dargestellten Verteilgeräts in dem ersten Zustand in einer Schnittdarstellung;
- Fig. 5: die Verstelleinrichtung des in der Fig. 1 dargestellten Verteilgeräts in dem zweiten Zustand in einer Schnittdarstellung;
- Fig. 6: ein erfindungsgemäßes Verteilgerät in einem ersten Zustand in einer Schnittdarstellung;
- Fig. 7: das in der Fig. 6 dargestellte Verteilgerät in einem zweiten Zustand in einer Schnittdarstellung;
- Fig. 8: ein erfindungsgemäßes Verteilgerät in einem ersten Zustand in einer Schnittdarstellung; und
- Fig. 9: das in der Fig. 8 dargestellte Verteilgerät in einem zweiten Zustand in einer Schnittdarstellung.

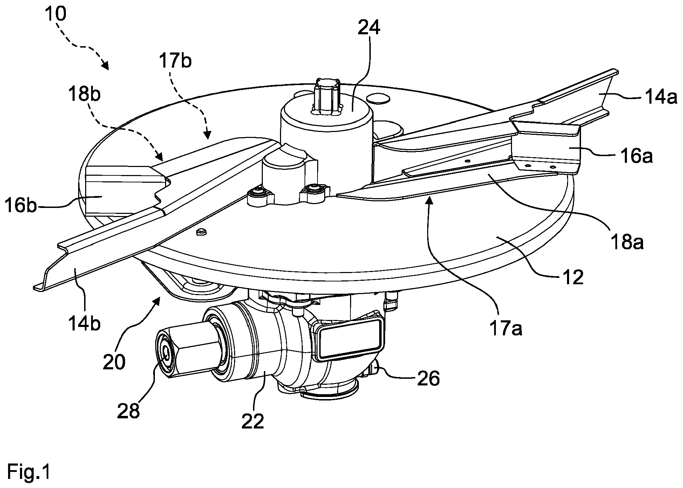

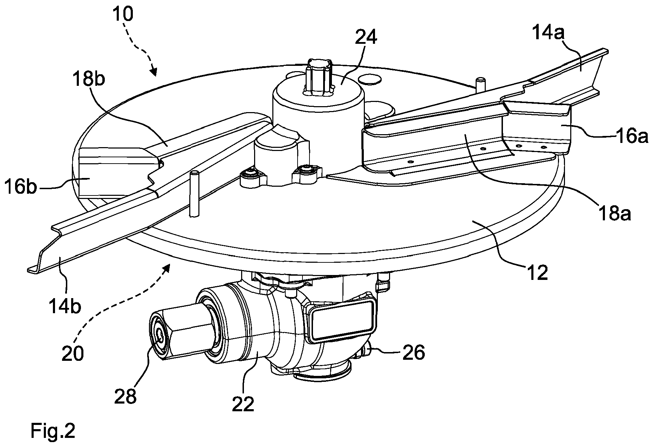

Die Fig. 1 und die Fig. 2 zeigen einen als Düngerstreuer ausgebildetes Verteilgerät 10. Das Verteilgerät 10 umfasst eine rotierend antreibbare Schleuderscheibe 12, auf welche das als Dünger ausgebildete Streugut aufgegeben wird.

Auf der Schleuderscheibe sind zwei Paare von feststehenden Wurfschaufeln 14a, 14b, 16a, 16b angeordnet. Die Wurfschaufeln 14a, 14b erstecken sich von einem mittig auf der Schleuderscheibe 12 angeordneten Deckel 24 im Wesentlichen radial nach außen und weisen jeweils einen Überstand auf, welcher über die Schleuderscheibe 12 hinausragt. Die Wurfschaufeln 16a, 16b sind im Außenbereich der Schleuderscheibe 12 angeordnet und schließen sich jeweils an radial innenliegende Ausnehmungen 17a, 17b in der Schleuderscheibe 12 an.

Außerdem weist das Verteilgerät 10 zwei Führungselemente 18a, 18b auf, welche derart in den Aufgabebereich der Schleuderscheibe 12 hinein bewegbar sind, dass das auf die Schleuderscheibe 12 aufgegebene Streugut durch die Führungselemente 18a, 18b geführt wird. Die Führungselemente 18a, 18b des dargestellten Verteilgeräts 10 sind in diesem Fall dazu eingerichtet, das auf die Schleuderscheibe 12 aufgebebene Streugut daran zu hindern, von den Wurfschaufeln 14a, 14b erfasst zu werden. Vielmehr dienen die Führungselemente 18a, 18b um Lenken des auf die Schleuderscheibe 12 aufgegebenen Streuguts auf die Wurfschaufeln 16a, 16b. Hierdurch können unterschiedliche Wurfbilder, beispielsweise zum Grenz-, Rand- oder Keilstreuen, realisiert werden.

Die zwei Führungselemente 18a, 18b sind mit einer Verstelleinrichtung 20 verbunden, welche dazu eingerichtet ist, die Führungselemente 18a, 18b entsprechend zwischen einem eingefahrenen Zustand und einem ausgefahrenen Zustand zu verstellen.

Das Verteilgerät 10 umfasst zusätzlich ein unterhalb der Schleuderscheibe 12 angeordnetes Gehäuse 22, wobei eine Eingangswelle 28 abschnittsweise in dem Gehäuse 22 angeordnet ist. Die Eingangswelle 28 dient dem rotatorischen Antrieb der Schleuderscheibe 12. Außerdem ist ein als Anschlussstutzen ausgebildeter Hydraulikanschluss 26 mit dem Gehäuse 22 verbunden. Über den Hydraulikanschluss 26 ist eine Hydraulikflüssigkeit, wie etwa Hydrauliköl, in eine innerhalb des Gehäuses 22 angeordnete und als Hohlwelle ausgebildete Antriebswelle (verdeckt) einleitbar, wobei über den Hydraulikdruck der Hydraulikflüssigkeit letztendlich die Führungselemente 18a, 18b verstellbar sind.

In dem in der Fig. 1 dargestellten Zustand befinden Sie die Führungselemente 18a, 18b in dem eingefahrenen Zustand. Eine obere Fläche der Führungselemente 18a, 18b weist im Wesentlichen die gleiche Form wie die Ausnehmungen 17a, 17b in der Schleuderscheibe 12 auf. In dem eingefahrenen Zustand verschließen diese oberen Flächen der Führungselemente 18a, 18b die Ausnehmungen 17a, 17b in der Schleuderscheibe 12, sodass ein Durchfallen des Streuguts durch die Ausnehmungen 17a, 17b in der Schleuderscheibe 12 im Wesentlichen verhindert ist.

Dadurch, dass sich die Führungselemente 18a, 18b in dem eingefahrenen Zustand befinden, wird das auf die Schleuderscheibe 12 aufgegebene Streugut von den Wurfschaufeln 14a, 14b erfasst, beschleunigt und ausgeworfen.

In dem in der Fig. 2 dargestellten Zustand befinden Sie die Führungselemente 18a, 18b in dem ausgefahrenen Zustand. Eine untere Fläche der Führungselemente 18a, 18b weist im Wesentlichen die gleiche Form wie die Ausnehmungen 17a, 17b in der Schleuderscheibe 12 auf. In dem ausgefahrenen Zustand verschließen diese unteren Flächen der Führungselemente 18a, 18b die Ausnehmungen 17a, 17b in der Schleuderscheibe 12, sodass ein Durchfallen des Streuguts durch die Ausnehmungen 17a, 17b in der Schleuderscheibe 12 im Wesentlichen verhindert ist.

Dadurch, dass sich die Führungselemente 18a, 18b in dem ausgefahrenen Zustand befinden, wird das auf die Schleuderscheibe 12 aufgegebene Streugut von den Führungselementen 18a, 18b erfasst, welche verhindern, dass das auf die Schleuderscheibe 12 aufgegebene Streugut von den Wurfschaufeln 14a, 14b erfasst wird. Die Führungselemente 18a, 18b lenken das auf die Schleuderscheibe 12 aufgegebene Streugut zu den Wurfschaufeln 16a, 16b, wobei die Wurfschaufeln 16a, 16b das Streugut auswerfen.

Durch die abweichende Position und Ausrichtung sowie den sich unterscheidenden Überstand über die Schleuderscheibe 12 der Wurfschaufeln 16a, 16b im Vergleich zu den Wurfschaufeln 14a, 14b wird das Wurfbild des Streuguts verändert.

Die Führungselemente 18a, 18b weisen einen im Wesentlichen U-förmigen Querschnitt auf, sodass die Führungselemente 18a, 18b doppelt gebogen ausgebildet sind. Durch die U-Form der Führungselemente 18a, 18b werden die Ausnehmungen 17a, 17b in der Schleuderscheibe 12 sowohl in dem eingefahrenen Zustand der Führungselemente 18a, 18b als auch in dem ausgefahrenen Zustand der Führungselemente 18a, 18b in geeigneter Weise verschlossen, sodass auf die Schleuderscheibe aufgegebenes Streugut nicht durch die Ausnehmungen 17a, 17b durch die Schleuderscheibe 12 fällt. Außerdem erlaubt die U-Form der Führungselemente 18a, 18b in dem ausgefahrenen Zustand der Führungselemente 18a, 18b ein Führen beziehungsweise Lenken des auf die Schleuderscheibe 12 aufgegebenen Streuguts in Richtung der Wurfschaufeln 16a, 16b.

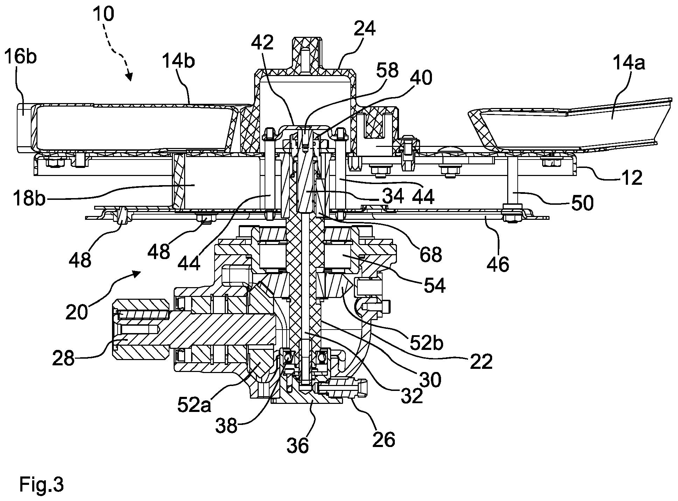

Die Fig. 3 zeigt, dass die Eingangswelle 28 über ein Kegelradpaar 52a, 52b mit der Antriebswelle 30 verbunden ist. Die Antriebswelle 30 ist dazu eingerichtet, die Schleuderscheibe 12 über die Welle-Nabe-Verbindung 68 rotierend anzutreiben und weist eine sich in axialer Richtung über die gesamte Länge der Antriebswelle 30 erstreckende Ausnehmung 32 auf. Somit ist die Antriebswelle 30 als Hohlwelle ausgebildet. Die Radiallagerung der Antriebswelle erfolgt über das Lager 38 und das Lager 54. Das Lager 38 ist innerhalb einer Aufnahme 36 angeordnet, wobei der Hydraulikanschluss 26 ebenfalls in der Aufnahme 36 befestigt ist.

Die Verstelleinrichtung 20 umfasst ein abschnittsweise innerhalb der Ausnehmung 32 der Antriebswelle 30 in axialer Richtung bewegbares Betätigungsglied 34, über welches die Führungselemente 18a, 18b verstellbar sind. Das Betätigungsglied 34 ragt auf der der Schleuderscheibe 12 zugewandten Seite aus der Antriebswelle 30 heraus. Die Ausnehmung 32 in der Antriebswelle 30 ist mit dem Hydraulikanschluss 26 gekoppelt, wobei das Betätigungsglied 34 als Kolben ausgebildet ist, welcher durch Beaufschlagung mit Hydraulikdruck innerhalb der Ausnehmung 32 der Antriebswelle 30 in axialer Richtung bewegbar ist.

Über den Fortsatz 40 ist das Betätigungsglied 34 rotatorisch mit der Antriebswelle 30 koppelt, sodass das Betätigungsglied 34 stets mit der gleichen Drehzahl rotiert wie die Antriebswelle 30. Außerdem ist das Betätigungsglied 34 über ein als Schraube ausgebildetes Befestigungselement 58 mit einem Flügelelement 42 verbunden, wobei das Flügelelement 42 über Haltestreben 44 mit einem in vertikaler Richtung bewegbaren Träger 46 verbunden ist, welcher unterhalb der Schleuderscheibe 12 angeordnet ist. Mittels der als Schrauben ausgebildeten Befestigungselemente 48 sind die Führungselemente 18a, 18b an dem Träger 46 befestigt, sodass eine Axialbewegung des Betätigungsglieds 34 letztendlich eine Bewegung des einen oder der mehreren Führungselemente 18a, 18b in einen Aufgabebereich der Schleuderscheibe 12 hinein und/oder aus dem Aufgabebereich der Schleuderscheibe 12 heraus verursachen kann. Die von dem Betätigungsglieds 34 verursachte Bewegung der Führungselemente 18a, 18b ist eine Linearbewegung in vertikaler Richtung und somit parallel zu der Rotationsachse der Schleuderscheibe 12, wobei die Axialbewegung des Betätigungsglieds 34 ohne vorherige Bewegungsumwandlung an die Führungselemente 18a, 18b übertragen wird. Zur Führung des Trägers 46 und der auf dem Träger 46 befestigten Führungselemente 18a, 18b werden Führungsstifte 50 eingesetzt, welche ein seitliches Auslenken oder ein seitliches Kippen des Trägers 46 verhindern.

Das Verteilgerät 10 umfasst ferner eine Steuerungseinrichtung (nicht dargestellt), welche dazu eingerichtet ist, den auf das Betätigungsglied 34 wirkenden Hydraulikdruck zu steuern.

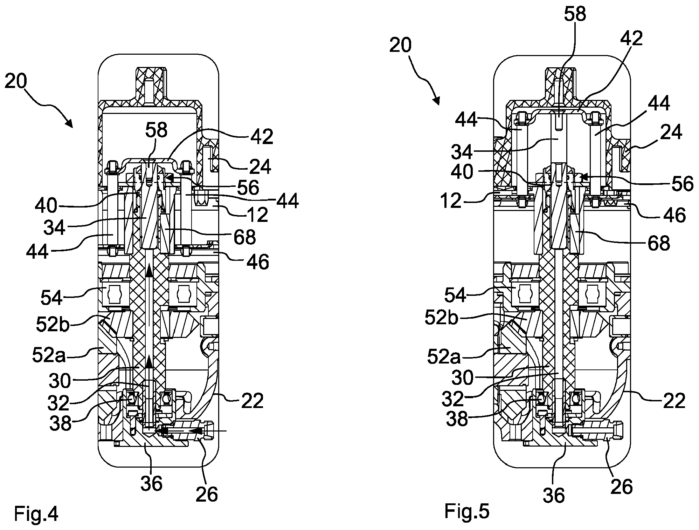

Die Fig. 4 zeigt die Verstelleinrichtung 20 des Verteilgeräts 10 bei eingefahrenen Führungselementen (nicht dargestellt). Ausgehend von dem in der Fig. 4 dargestellten Zustand kann der Hydraulikdruck innerhalb der Ausnehmung 32 der Antriebswelle 30 erhöht werden. Durch den erhöhten Hydraulikdruck wird das Betätigungsglied 34 nach oben ausgelenkt. Dadurch, dass die Führungselemente über den Träger 46, die Haltestreben 44, das Flügelelement 42 und das Befestigungselement 58 mit dem Betätigungsglied 34 verbunden ist, verursacht die Druckerhöhung somit auch eine Aufwärtsbewegung der Führungselemente in den Aufgabebereich der Schleuderscheibe 12 hinein.

Die Fig. 5 zeigt die Verstelleinrichtung 20 des Verteilgeräts 10 bei ausgefahrenen Führungselementen (nicht dargestellt), welche sich in dem Aufgabebereich der Schleuderscheibe 12 befinden. Dieser Zustand kann durch das Halten eines konstanten Druckniveaus gehalten werden. Fällt der Hydraulikdruck innerhalb der Ausnehmung 32 der Antriebswelle 30 wieder ab, verursacht eine oder verursachen mehrere Rückstellfedern eine Abwärtsbewegung des Trägers 46, wodurch die Führungselemente aus dem Aufgabebereich der Schleuderscheibe 12 heraus bewegt werden.

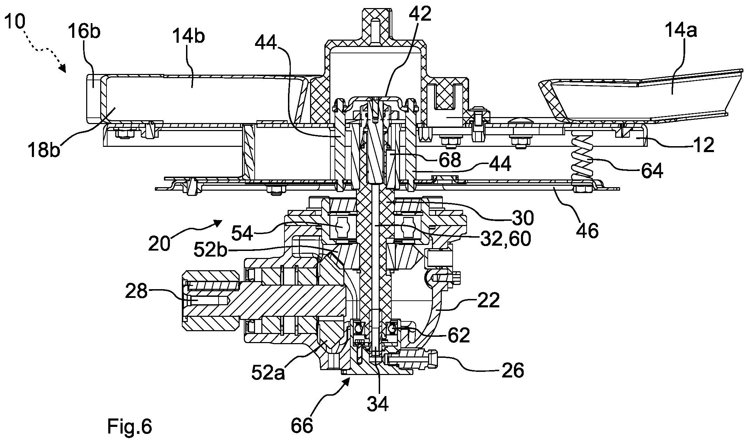

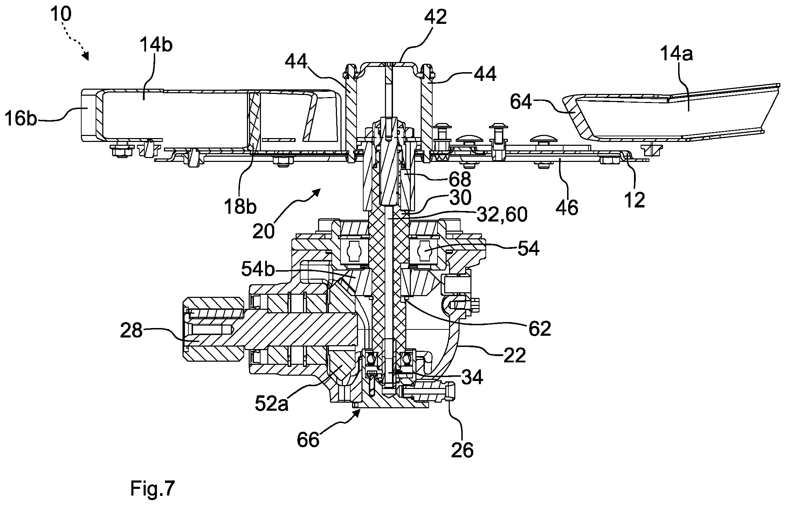

Die Fig. 6 und die Fig. 7 zeigen eine weitere Ausführungsform des Verteilgeräts 10. Anders als bei dem in den Fig. 1 bis 5 dargestellten Verteilgerät 10 ist das Betätigungsglied 34 nun von der Antriebswelle 30 rotatorisch entkoppelt, nämlich derart, dass das Betätigungsglied 34 während der Rotation der Antriebswelle 30 keine Drehbewegung ausführt.

Das Betätigungsglied 34 ist innerhalb eines Betätigungszylinders 66 auf der der Schleuderscheibe 12 abgewandten Seite der Antriebswelle 30 angeordnet, wobei der Betätigungsglied 34 durch eine Axialbewegung in die Ausnehmung 32 der Antriebswelle 30 hinein bewegbar ist, sodass das Betätigungsglied 34 aus der der Schleuderscheibe 12 abgewandten Seite aus der Antriebswelle 30 herausragt.

Innerhalb der Ausnehmung 32 der Antriebswelle 30 ist außerdem ein Übertragungsglied 60 verschiebbar angeordnet, welches dazu eingerichtet ist, eine Axialbewegung des Betätigungsglieds 34 an die Führungselemente 18b (Führungselement 18a ist nicht dargestellt) zu übertragen. Zwischen dem Betätigungsglied 34 und dem Übertragungsglied 60 ist aufgrund der Drehzahldifferenz im Betrieb des Verteilgeräts 10 ein Axiallager 62 angeordnet. Die Übertragung der Axialbewegung auf die Führungselemente 18b erfolgt über ein mit dem Übertragungsglied 60 verbundenes Flügelelement 42, Haltestreben 44 und einen Träger 46, auf welchem die Führungselemente 18b angeordnet sind.

Bei der dargestellten Ausführungsform werden die Führungselemente 18b bei einer Linearbewegung des Betätigungsglieds 34 in den Aufgabebereich der Schleuderscheibe 12 nach oben gezogen.

In dem in der Fig. 6 dargestellten Zustand befinden sich die Führungselemente 18b in dem eingefahrenen Zustand und beeinflussen somit nicht den Auswurf des auf die Schleuderscheibe 12 aufgegebenen Streuguts. Durch eine Druckerhöhung innerhalb des Betätigungszylinders 66 kann das Betätigungsglied 34 axial ausgelenkt werden, wodurch die Führungselemente 18b in den ausgefahrenen Zustand überführt werden.

In dem in der Fig. 7 dargestellten Zustand befinden sich die Führungselemente 18b in dem ausgefahrenen Zustand und beeinflussen somit den Auswurf des auf die Schleuderscheibe 12 aufgegebenen Streuguts. Durch die Bewegung des Trägers 46 in Richtung der Schleuderscheibe 12 wurden Rückstellfedern 64 gestaucht, welche ein Herausbewegen der Führungselemente 18b aus dem Aufgabebereich der Schleuderscheibe 12 verursachen, sobald der Hydraulikdruck innerhalb des Betätigungszylinders 66 einen Grenzdruck unterschreitet.

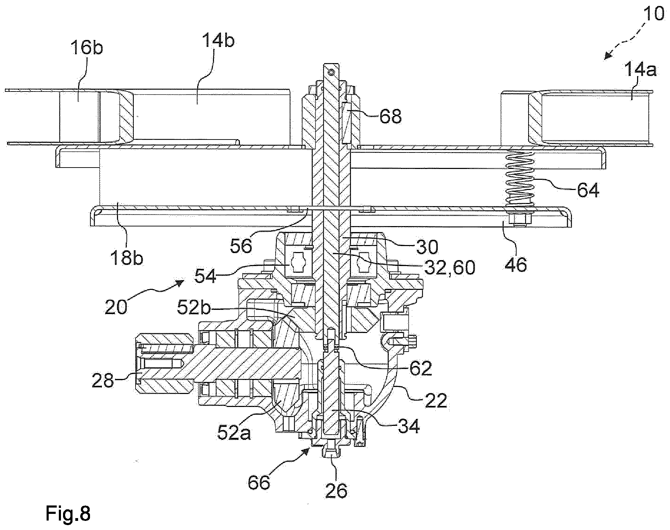

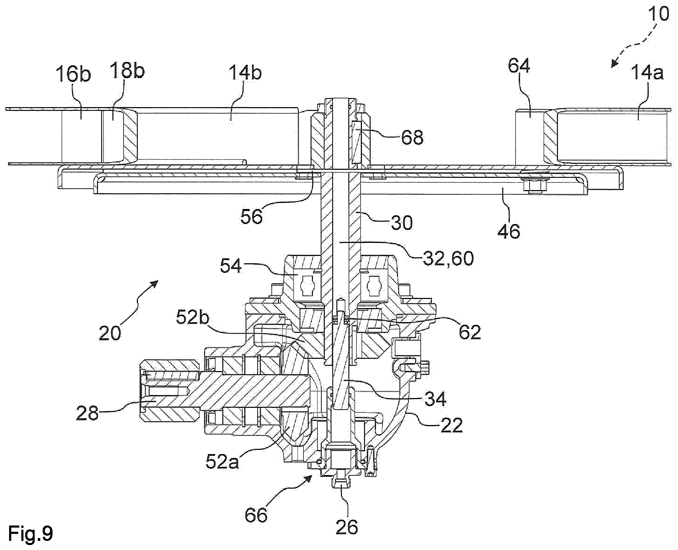

Die Fig. 8 und die Fig. 9 zeigen eine weitere Ausführungsform des Verteilgeräts 10. Anders als bei dem in den Fig. 6 und 7 dargestellten Verteilgerät 10 werden die Führungselemente 18a, 18b bei einer Linearbewegung in den Aufgabebereich der Schleuderscheibe 12 nach oben geschoben. Dies wird durch eine abweichende Kopplung des Übertragungsglieds 60 mit dem Träger 46 realisiert. Ein Stift 56 sorgt für eine direkte Kraftübertragung zwischen dem Übertragungsglied 60 und dem Träger 46. Innerhalb der Antriebwelle 30 sind vertikal verlaufende Schlitze angeordnet, wobei sich der Stift 56 durch die Schlitze erstreckt. Die Schlitze erlauben eine vertikale Bewegung des Stifts 56 relativ zur Antriebswelle 30.

In dem in der Fig. 8 dargestellten Zustand befinden sich die Führungselemente 18b in dem eingefahrenen Zustand. In dem in der Fig. 9 dargestellten Zustand befinden sich die Führungselemente 18b in dem ausgefahrenen Zustand.

### Bezugszeichenliste

- 10: Verteilgerät
- 12: Schleuderscheibe
- 14a, 14b: Wurfschaufeln
- 16a, 16b: Wurfschaufeln
- 17a, 17b: Ausnehmungen
- 18a, 18b: Führungselemente
- 20: Verstelleinrichtung
- 22: Gehäuse
- 24: Deckel
- 26: Hydraulikanschluss
- 28: Eingangswelle
- 30: Antriebswelle
- 32: Ausnehmung
- 34: Betätigungsglied
- 36: Aufnahme
- 38: Lager
- 40: Fortsatz
- 42: Flügelelement
- 44: Haltestreben
- 46: Träger
- 48: Befestigungselemente
- 50: Führungsstift
- 52a, 52b: Kegelradpaar
- 54: Lager
- 56: Stift
- 58: Befestigungselement
- 60: Übertragungsglied
- 62: Axiallager
- 64: Rückstellfeder
- 66: Betätigungszylinder
- 68: Welle-Nabe-Verbindung

## Patentansprüche

1. Verteilgerät (10) für Streugut, insbesondere Düngerstreuer, mit
- zumindest einer rotierend antreibbaren Schleuderscheibe (12);
- einem oder mehreren verstellbaren Führungselementen (18a, 18b), welche dazu eingerichtet sind, das auf die Schleuderscheibe (12) aufgegebene Streugut zu führen;
- einer Antriebswelle (30), welche eine sich in axialer Richtung durch die Antriebswelle (30) erstreckende Ausnehmung (32) aufweist und dazu eingerichtet ist, die Schleuderscheibe (12) rotierend anzutreiben; und
- einer Verstelleinrichtung (20), welche dazu eingerichtet ist, das eine oder die mehreren Führungselemente (18a, 18b) zu verstellen,
wobei die Verstelleinrichtung (20) ein zumindest abschnittsweise innerhalb der Ausnehmung (32) der Antriebswelle (30) in axialer Richtung bewegbares Betätigungsglied (34) umfasst, über welches das eine oder die mehreren Führungselemente (18a, 18b) verstellbar sind, **dadurch gekennzeichnet, dass** die Ausnehmung (32) in der Antriebswelle (30) mit einem Hydraulikanschluss (26) gekoppelt ist, wobei das Betätigungsglied (34) als Kolben ausgebildet ist, welcher durch Beaufschlagung mit Hydraulikdruck innerhalb der Ausnehmung (32) der Antriebswelle (30) in axialer Richtung bewegbar ist.

2. Verteilgerät (10) nach Anspruch 1,
**dadurch gekennzeichnet, dass** die Ausnehmung (32) in der Antriebswelle (30) sich über die gesamte Länge der Antriebswelle (30) erstreckt.

3. Verteilgerät (10) nach Anspruch 1 oder 2,
**dadurch gekennzeichnet, dass** das Betätigungsglied (34) rotatorisch mit der Antriebswelle (30) gekoppelt ist.

4. Verteilgerät (10) nach einem der vorstehenden Ansprüche,
**dadurch gekennzeichnet, dass** das Betätigungsglied (34) als Bestandteil einer hydraulischen Betätigungseinrichtung ausgebildet ist, wobei das Betätigungsglied (34) hydraulisch innerhalb der Ausnehmung (32) der Antriebswelle (30) in axialer Richtung bewegbar ist.

5. Verteilgerät (10) nach einem der vorstehenden Ansprüche,
**dadurch gekennzeichnet, dass** das Betätigungsglied (34) zumindest in einem Zustand der Verstelleinrichtung (20) aus der der Schleuderscheibe (12) zugewandten Seite der Antriebswelle (30) herausragt.

6. Verteilgerät (10) nach Anspruch 1 oder 2,
**dadurch gekennzeichnet, dass** das Betätigungsglied (34) von der Antriebswelle (30) rotatorisch entkoppelt ist.

7. Verteilgerät (10) nach Anspruch 6,
**dadurch gekennzeichnet, dass** das Betätigungsglied (34) innerhalb eines Betätigungszylinders (66) auf der der Schleuderscheibe (12) abgewandten Seite der Antriebswelle (30) angeordnet ist.

8. Verteilgerät (10) nach Anspruch 6 oder 7,
**dadurch gekennzeichnet, dass** das Betätigungsglied (34) derart von der Antriebswelle (30) rotatorisch entkoppelt ist, dass das Betätigungsglied (34) während der Rotation der Antriebswelle (30) keine Drehbewegung ausführt.

9. Verteilgerät (10) nach einem der vorstehenden Ansprüche,
**gekennzeichnet durch** ein zumindest abschnittsweise innerhalb der Ausnehmung (32) der Antriebswelle (30) angeordnetes Übertragungsglied (60), welches dazu eingerichtet ist, eine Axialbewegung des Betätigungsglieds (34) an das eine oder die mehreren Führungselemente (18a, 18b) oder an einen mit dem einen oder den mehreren Führungselementen (18a, 18b) verbundenen Bewegungsumwandler zu übertragen.

10. Verteilgerät (10) nach Anspruch 9,
**dadurch gekennzeichnet, dass** zwischen dem Betätigungsglied (34) und dem Übertragungsglied (60) ein Axiallager (62) angeordnet ist.

11. Verteilgerät (10) nach Anspruch 9 oder 10,
**dadurch gekennzeichnet, dass** das Betätigungsglied (34) und/oder das Übertragungsglied (60) zumindest in einem Zustand der Verstelleinrichtung (20) aus der der Schleuderscheibe (12) abgewandten Seite aus der Antriebswelle (30) herausragt.

12. Verteilgerät (10) nach einem der vorstehenden Ansprüche,
**dadurch gekennzeichnet, dass** eine Axialbewegung des Betätigungsglieds (34) eine Bewegung des einen oder der mehreren Führungselemente (18a, 18b) in einen Aufgabebereich der Schleuderscheibe (12) hinein und/oder aus dem Aufgabebereich der Schleuderscheibe (12) heraus verursacht.

13. Verteilgerät (10) nach Anspruch 12,
**dadurch gekennzeichnet, dass** die Bewegung des einen oder der mehreren Führungselemente (18a, 18b) eine Linearbewegung, vorzugsweise parallel zu der Rotationsachse der Schleuderscheibe (12), und/oder eine Schwenkbewegung des einen oder der mehreren Führungselemente (18a, 18b) umfasst.

14. Verteilgerät (10) nach Anspruch 12 oder 13,
**dadurch gekennzeichnet, dass** das eine oder die mehreren Führungselemente (18a, 18b) bei einer Linearbewegung in den Aufgabebereich der Schleuderscheibe (12) nach oben geschoben oder nach oben gezogen werden.

15. Verteilgerät (10) nach einem der vorstehenden Ansprüche,
**dadurch gekennzeichnet, dass** das eine oder die mehreren Führungselemente (18a, 18b) einfach oder mehrfach gebogen ausgebildet sind.

16. Verteilgerät (10) nach einem der vorstehenden Ansprüche,
**gekennzeichnet durch** eine Steuerungseinrichtung, welche dazu eingerichtet ist, den auf das Betätigungsglied (34) wirkenden Hydraulikdruck zu steuern.

17. Verteilgerät (10) nach zumindest Anspruch 4,
**gekennzeichnet durch** eine Steuerungseinrichtung, welche dazu eingerichtet ist, die hydraulische Betätigungseinrichtung zu steuern.

## Claims

1. Distributor (10) for spreading material, in particular fertilizer spreader, having:
- at least one centrifugal disc (12) that is drivable in rotation;
- one or more adjustable guide elements (18a, 18b), which are configured to guide the spreading material transferred onto the centrifugal disc (12);
- a drive shaft (30), which has a clearance (32) extending in an axial direction through the drive shaft (30) and is configured to drive the centrifugal disc (12) in rotation; and
- an adjusting device (20), which is configured to adjust the one or more guide elements (18a, 18b),
wherein the adjusting device (20) comprises an actuating member (34), which is movable at least partially in the axial direction within the clearance (32) in the drive shaft (30) and via which the one or more guide elements (18a, 18b) are adjustable, **characterized in that** the clearance (32) in the drive shaft (30) is coupled to a hydraulic connection (26), wherein the actuating member (34) is in the form of a piston that is movable in the axial direction within the clearance (32) in the drive shaft (30) by application of hydraulic pressure.

2. Distributor (10) according to Claim 1,
**characterized in that** the clearance (32) in the drive shaft (30) extends along the entire length of the drive shaft (30).

3. Distributor (10) according to Claim 1 or 2,
**characterized in that** the actuating member (34) is rotationally coupled to the drive shaft (30).

4. Distributor (10) according to one of the preceding claims,
**characterized in that** the actuating member (34) is in the form of a constituent of a hydraulic actuating device, wherein the actuating member (34) is hydraulically movable in the axial direction within the clearance (32) in the drive shaft (30).

5. Distributor (10) according to one of the preceding claims,
**characterized in that** the actuating member (34) projects, at least in one state of the adjusting device (20), out of that side of the drive shaft (30) that faces the centrifugal disc (12).

6. Distributor (10) according to Claim 1 or 2,
**characterized in that** the actuating member (34) is rotationally decoupled from the drive shaft (30).

7. Distributor (10) according to Claim 6,
**characterized in that** the actuating member (34) is arranged within an actuating cylinder (66) on that side of the drive shaft (30) that faces away from the centrifugal disc (12).

8. Distributor (10) according to Claim 6 or 7,
**characterized in that** the actuating member (34) is rotationally decoupled from the drive shaft (30) in such a way that the actuating member (34) does not carry out any rotary movement during the rotation of the drive shaft (30).

9. Distributor (10) according to one of the preceding claims,
**characterized by** a transmission member (60), which is arranged at least partially within the clearance (32) in the drive shaft (30) and is configured to transmit an axial movement of the actuating member (34) to the one or more guide elements (18a, 18b) or to a movement converter connected to the one or more guide elements (18a, 18b) .

10. Distributor (10) according to Claim 9,
**characterized in that** an axial bearing (62) is arranged between the actuating member (34) and the transmission member (60).

11. Distributor (10) according to Claim 9 or 10,
**characterized in that** the actuating member (34) and/or the transmission member (60) projects, at least in one state of the adjusting device (20), out of that side of the drive shaft (30) that faces away from the centrifugal disc (12).

12. Distributor (10) according to one of the preceding claims,
**characterized in that** an axial movement of the actuating member (34) causes a movement of the one or more guide elements (18a, 18b) into a discharging region of the centrifugal disc (12) and/or out of the discharging region of the centrifugal disc (12).

13. Distributor (10) according to Claim 12,
**characterized in that** the movement of the one or more guide elements (18a, 18b) comprises a linear movement, preferably parallel to the axis of rotation of the centrifugal disc (12), and/or a pivoting movement of the one or more guide elements (18a, 18b).

14. Distributor (10) according to Claim 12 or 13,
**characterized in that** the one or more guide elements (18a, 18b) are pushed upward or pulled upward into the discharging region of the centrifugal disc (12) during a linear movement.

15. Distributor (10) according to one of the preceding claims,
**characterized in that** the one or more guide elements (18a, 18b) are formed with one or more bends.

16. Distributor (10) according to one of the preceding claims,
**characterized by** a control device, which is configured to control the hydraulic pressure acting on the actuating member (34).

17. Distributor (10) according at least to Claim 4,
**characterized by** a control device, which is configured to control the hydraulic actuating device.

## Revendications

1. Appareil de distribution (10) pour une matière à épandre, en particulier épandeur d'engrais, comprenant
- au moins un disque centrifuge (12) pouvant être entraîné en rotation ;
- un ou plusieurs éléments de guidage réglables (18a, 18b), lesquels sont conçus pour guider la matière à épandre chargée sur le disque centrifuge (12) ;
- un arbre d'entraînement (30), lequel comprend un évidement (32) s'étendant dans la direction axiale à travers l'arbre d'entraînement (30) et est conçu pour entraîner en rotation le disque centrifuge (12) ; et
- un dispositif de réglage (20), lequel est conçu pour régler le ou les éléments de guidage (18a, 18b), dans lequel le dispositif de réglage (20) comporte un organe d'actionnement (34) mobile dans la direction axiale au moins dans certaines régions à l'intérieur de l'évidement (32) de l'arbre d'entraînement (30), organe d'actionnement par le biais duquel le ou les éléments de guidage (18a, 18b) sont réglables, **caractérisé en ce que** l'évidement (32) dans l'arbre d'entraînement (30) est accouplé à un raccord hydraulique (26), l'organe d'actionnement (34) étant réalisé sous forme de piston, lequel est mobile dans la direction axiale par application d'une pression hydraulique à l'intérieur de l'évidement (32) de l'arbre d'entraînement (30).

2. Appareil de distribution (10) selon la revendication 1,
**caractérisé en ce que** l'évidement (32) dans l'arbre d'entraînement (30) s'étend sur toute la longueur de l'arbre d'entraînement (30).

3. Appareil de distribution (10) selon la revendication 1 ou 2,
**caractérisé en ce que** l'organe d'actionnement (34) est accouplé en rotation à l'arbre d'entraînement (30).

4. Appareil de distribution (10) selon l'une des revendications précédentes,
**caractérisé en ce que** l'organe d'actionnement (34) est réalisé sous forme de composant d'un dispositif d'actionnement hydraulique, l'organe d'actionnement (34) étant mobile hydrauliquement dans la direction axiale à l'intérieur de l'évidement (32) de l'arbre d'entraînement (30).

5. Appareil de distribution (10) selon l'une des revendications précédentes,
**caractérisé en ce que** l'organe d'actionnement (34) fait saillie à partir du côté de l'arbre d'entraînement (30) tourné vers le disque centrifuge (12) au moins dans un état du dispositif de réglage (20).

6. Appareil de distribution (10) selon la revendication 1 ou 2,
**caractérisé en ce que** l'organe d'actionnement (34) est désaccouplé en rotation de l'arbre d'entraînement (30).

7. Appareil de distribution (10) selon la revendication 6,
**caractérisé en ce que** l'organe d'actionnement (34) est disposé à l'intérieur d'un cylindre d'actionnement (66) sur le côté de l'arbre d'entraînement (30) opposé au disque centrifuge (12).

8. Appareil de distribution (10) selon la revendication 6 ou 7,
**caractérisé en ce que** l'organe d'actionnement (34) est désaccouplé en rotation de l'arbre d'entraînement (30) de telle sorte que l'organe d'actionnement (34) n'effectue aucun mouvement rotatif pendant la rotation de l'arbre d'entraînement (30).

9. Appareil de distribution (10) selon l'une des revendications précédentes,
**caractérisé par** un organe de transmission (60) disposé au moins dans certaines régions à l'intérieur de l'évidement (32) de l'arbre d'entraînement (30), lequel organe de transmission est conçu pour transmettre un mouvement axial de l'organe d'actionnement (34) à l'élément de guidage ou aux éléments de guidage (18a, 18b) ou à un convertisseur de mouvement relié à l'élément de guidage ou aux éléments de guidage (18a, 18b) .

10. Appareil de distribution (10) selon la revendication 9,
**caractérisé en ce qu'**un palier axial (62) est disposé entre l'organe d'actionnement (34) et l'organe de transmission (60).

11. Appareil de distribution (10) selon la revendication 9 ou 10,
**caractérisé en ce que** l'organe d'actionnement (34) et/ou l'organe de transmission (60) font saillie hors de l'arbre d'entraînement (30) à partir du côté opposé au disque centrifuge (12) au moins dans un état du dispositif de réglage (20).

12. Appareil de distribution (10) selon l'une des revendications précédentes,
**caractérisé en ce qu'**un mouvement axial de l'organe d'actionnement (34) provoque un mouvement du ou des éléments de guidage (18a, 18b) dans une zone de chargement du disque centrifuge (12) et/ou hors de la zone de chargement du disque centrifuge (12).

13. Appareil de distribution (10) selon la revendication 12,
**caractérisé en ce que** le déplacement du ou des éléments de guidage (18a, 18b) comporte un mouvement linéaire, de préférence parallèle à l'axe de rotation du disque centrifuge (12), et/ou un mouvement de pivotement du ou des éléments de guidage (18a, 18b).

14. Appareil de distribution (10) selon la revendication 12 ou 13,
**caractérisé en ce que** le ou les éléments de guidage (18a, 18b) sont poussés vers le haut ou tirés vers le bas lors d'un mouvement linéaire dans la zone de chargement du disque centrifuge (12).

15. Appareil de distribution (10) selon l'une des revendications précédentes,
**caractérisé en ce que** le ou les éléments de guidage (18a, 18b) sont formés de manière cintrée une fois ou plusieurs fois.

16. Appareil de distribution (10) selon l'une des revendications précédentes,
**caractérisé par** un dispositif de commande, lequel est conçu pour commander la pression hydraulique agissant sur l'organe d'actionnement (34).

17. Appareil de distribution (10) selon au moins la revendication 4,
**caractérisé par** un dispositif de commande, lequel est conçu pour commander le dispositif d'actionnement hydraulique.
